# EUROPEAN PATENT APPLICATION

(11) **EP 3 868 822 A1**
(43) Date of publication of application: **25.08.2021**
(21) Application number: 20158627.8
(22) Date of filing: 20.02.2020
(51) Int. Cl.: C08K 5/1575

(54) **CLARIFYING AGENT, COMPOSITIONS, COMPRISING SAME, AND METHODS OF MANUFACTURE THEREOF**

(71) Applicant: Ingenia Polymers International S.A., 2520 Luxenbourg (LU)
(72) Inventor: Charlton, John Zachariah, ON, N3T 5M8 (CA); Nguon, Oliver, 7552 GN Hengelo (NL); Vancso, G.J., 7552 GN Hengelo (NL); Lefas, John, L-2520 n/a (LU)
(74) Representative: Tomkins & Co

(57) **Abstract**

The present invention relates to clarifying agents, also known as nucleating agents, compositions comprising same and methods of manufacture thereof. The clarifying agents are dibenzylidene sorbitol (DDS)-based compounds which when produced by the methods of the invention show improved properties, and can be used at lower levels to achieve the same results as prior art clarifying agents.

## Description

### Field

The present invention relates to clarifying agents, also known as nucleating agents, compositions comprising same and methods of manufacture thereof.

### Background to the Invention

Polypropylene (PP) is one of the largest volume thermoplastics produced globally, offering excellent physical properties, good processability, and low cost. The performance of this material is contingent on its semi-crystalline structure. One common method to enhance the crystallization rate is the addition of nucleating agents. Sorbitol compounds, in particular, have proved effective, at low concentrations, at improving both mechanical and optical properties while shortening processing times. Other additives have widespread use to facilitate processing and prevent polymer degradation. For instance, fatty acids and antioxidants are frequently compounded with PP. However, the interactions of many of the common polymer additives with nucleators are unknown, and may yield antagonistic interactions, nucleator deactivation, and inferior properties.

The outstanding properties of polypropylene (PP) have established this polyolefin as one of the leading thermoplastic materials, with a global production reaching 56 million metric tons in 2018. The combination of low density, excellent chemical and thermal resistance, good mechanical and optical properties, low cost, and versatile processing conditions has enabled a vast range of applications. The material properties are contingent on the semi-crystalline arrangement of the polymer chains. During processing, crystallization of the polymer can be tuned by addition of a nucleating agent. Such additives expose a heterogeneous surface that promotes nucleation, and yield the formation of small crystalline domains with a narrow size-distribution. In addition, increase of the crystallization temperature enables shorter cycle-times and energy efficiency.

Additives incorporated into polymers have been proposed to improve transparency, increase the crystallization temperature of the resulting compositions, and reduce cycle times [Kobayashi, et al., U.S. Pat. No. 4,954,291]. In injection molding the cycle time is the total time required to complete all stages of the injection molding cycle - which stages include the fill time, packing time, cooling time and mold open time.

Nucleating agents (also called nucleators or nucleation catalysts) are compounds or compositions that thermodynamically promote the formation of crystalline domains throughout a polymer matrix. They display a heterogenous surface on which polymer molecules can initiate crystal growth. Nucleating agents affecting the optical properties (such as promoting higher clarity, higher transparency or lower haze) are referred to as clarifiers. Nucleating agents are classified as melt sensitive when their melting point is below or near the melting point of the polymer, and as melt insensitive when they do not dissolve in the polymer matrix.

Nucleating agents generally do not influence the peak melting temperature (Tp, ASTM E794-06) of a polymer (into which they are incorporated), however, importantly they do affect the crystallization temperature (Tc, ASTM E794-06). In particular, nucleating agents are employed to increase the crystallization temperature of a polymer. Higher polymer crystallization temperature may significantly reduce cycle time and increase output of product. One class of nucleating agents are those that are soluble in molten polymer, which promotes good dispersion of the nucleating agent in the molten polymer. These nucleating agents perform efficiently at low concentration (Kristiansen et al. Macromolecules 2003, 36, 5150-5156). Derivatives of acetals of polyhydric alcohols have been used as nucleating and/or clarifying agents for polymer resins and as gelling and thickening agents for organic liquids (Xie et al. U.S. Pat. No. 7,662,978 and references within). Such compounds are regarded as soluble in the molten polymer matrix, at temperatures employed during processing. Upon cooling, these additives self-assemble into a fibrillar network at a temperature higher than the crystallization point of the polymer, thereby providing a heterogenous surface and promoting polymer nucleation (Kristiansen et al.). Such compounds are sometimes referred to as organogelators or self-assembled fibrillar networks (SAFiNs).

Many dibenzylidene sorbitol (DBS)-based compounds have been reported, and are used as clarifying agents. See for instance Hamada, et al., U.S. Pat. No. 4,016,118; Kawai, et al., U.S. Pat. No. 4,314,039; Mahaffey, Jr., U.S. Pat. No. 4,371,645; Kobayashi, et al., U.S. Pat. No. 4,954,291, Rekers et al. U.S. Pat. No. 5,049; Xie et al. U.S. Pat. No. 7,662,978. These compounds have been shown to dissolve in the polymer melt; and upon cooling, to self-assemble into a nanosized three-dimensional fibrillar network prior to crystallization of the polymer. The large exposed surface area promotes a high nucleation density and formation of small crystalline domains. Such a mechanism was shown particularly beneficial in imparting low haze and high transparency to polypropylene materials. Among DBS-based compounds, 1,2,3-trideoxy-4,6:5,7-bis-O-[(4-propylphenyl)methylene]nonitol (TBPMN) is the most recent commercial clarifier, providing improved optical transparency and organoleptics, reduced yellowing, greater solubility in PP, and lower processing temperatures.

The DBS-compounds are used in a concentration ranging from about 0.005 to about 10 weight percent, preferably from about 0.025 to about 0.5 weight percent to effect nucleation and/or clarification of the host polymer. It has been suggested that the solubility of DBS-based compounds is low in polyolefins, and particularly in polypropylene. The melting temperature of these DBS-based compounds is typically higher than the melting temperature of the polyolefin resin, which can necessitate higher compounding temperatures than desired in order to achieve good incorporation of the DBS-based compound. Horváth et al. (RSC Adv., 2014, 4, 19737) assessed the solubility of nine different sorbitol type clarifiers in polypropylene. The solubility of the additives in polypropylene was determined to be small - a few 1000 ppm at most. Horváth et al. observed that the morphology of sorbitols transforms at a temperature significantly below their melting point, upon heating under air and ex-situ of the polymer matrix, and referred to this as the transformation temperature. Further, Horváth et al. observed that the formation of the fibrillary structure formed upon cooling of the molten sorbitols in the polymer matrix and posited that the size of the fibrils which is in the micron range should deteriorate the optical properties of a polymer, since such fibrils should scatter light, and concluded that solubility of the sorbitol clarifiers in molten polymer must be important in achieving their clarifying effect. Horváth et al. studied the effect of clarifier content of the peak temperature of crystallization of polypropylene containing nine different DBS-based compounds. Polypropylene with approximately 4500 ppm of 1,3:2,4-bis(3,4-dimethylbenzylidene) sorbitol (DMBDS) had a peak crystallization temperature of approximately 117°C under their processing conditions. Horváth et al. do not indicate if or how the structuring of the nucleator can be controlled. Importantly, the disclosed procedure under air is conducive to thermal degradation which rather deactivates the nucleator and results in poor clarity. By following Horvath's procedure, poor quality fibrils are obtained, and fibrils do not reform easily once melted. In addition, they do not teach how to incorporate such structures in a polymer resin. Rather, they suggest the possible formation of needles in the polymer resin.

Yamazaki et al. in U.S. Pat. Application Publication No. US2016115295 describe a clarifyinig agent composition obtained by heating a mixture in a range of from 80 °C to 180 °C, said mixture comprising not less than 85% by mass of a benzylidene sorbitol compound, 5 to 10% by mass oftetrakis-3(3,5-di-tert-butyl-4 hydroxyphenyl)propionyloxymethylmethane (AO 1010); and 6 to 9% by mass of a lubricant. Yamazaki et al. is concerned with improving the dispersion of a clarifying agent in a polymer. Yamazaki et al. heat the composition described therein with stirring for 15 minutes at a rotation speed of 500 rpm, and subsequently pass the clarifying agent through a 500 µm mesh. Yamazaki et al. is silent with respect to the method by which the clarifying agent and polymer are combined but found that despite heat treating each of comparative examples 3, 5, 6, 8, 9 and 11, if the amount of benzylidene sorbitol derivative was less than 80 wt%, if the amount of antioxidant exceeded 10% or if said antioxidant wasn't present, and if the lubricant was present in greater than 9 wt%, a deterioration in clarity was observed in the polymer - i.e. an increase in haze was observed.

Polymer additives typically come in powder, granule, or pellet form. These additives can be added to the host polymer during post reactor extrusion operations. Numerous techniques may be employed to introduce the additives to the polymer stream. In solution, suspension or slurry phase polymerization processes, additives and additive blends are frequently added to a liquid before being introduced to the post-reactor polymer-liquid slurry. Alternatively, the additives can be added to the final melt stream of polymer via a side arm extruder or other device, which can melt the additive and introduce them to the polymer stream. In this case, there will typically be further mixing via an extruder or other mixing device and pumping of the polymer/additive mixture through a die for pelletizing the final polymer. In other polymerization processes such as a gas phase reactor, the polymer exits the reactor as a powdered "reactor granule." In this case, additives can be added to the polymer in several different ways. The additives can be dry mixed into the solid "reactor granule" powder stream. This can be packaged off as a final saleable product or it can be further fed to an extruder or other melting device in order to mix and homogenize the polymer and disperse the additives into the molten polymer. When additives are added to the solid "reactor granule" powder stream, the additives can be introduced at this stage via their neat forms, typically powders, or via a concentrate or masterbatch form. This mixture of additives and polymer reactor granules are subsequently melted, mixed and pumped through a die for pelletization, typically via a twin-screw extruder. Alternatively, in this type of process, the additives can be introduced via a side arm extruder. The side arm extruder melts the additives and feeds them into a molten polymer stream where they are further mixed into the final polymers and pelletized. In all of these techniques, the addition of the additives in powder form can be difficult to handle and feed, and in the case of some additives, they pose a potential health, fire, and explosion risk. If the polymer system requires the addition of several components, the additives must be either pre-blended, or the use of more than one feeder is required. Multiple additives can be dry mixed to create a powder additive preblend, or can be compacted, or melt formed via a variety of processes into a flake, granule or low-dust pellet. The use of such a preblend of multiple additives simplifies addition to the polymer. When a side-arm extruder is used to incorporate the additives into the polymer, it is not common to feed the powdered additives directly for numerous reasons. In addition to the above mentioned issues with handling and feeding the additives in powder form to the side-arm extruder, the melting and viscosity behaviour of the additives and the additive mixtures are typically not suitable for direct addition via this method. As a result, the powdered additives can be made into a masterbatch. This type of masterbatch typically is made by extruding a concentration of additives with a polymer carrier resin that is similar and compatible with the main polymer being produced in the polymerization process.

In addition to nucleating agents, other additives are commonly employed to provide stabilization or meet functional requirements. Calcium stearate (CaSt) acts as a catalyst neutralizer and/or an internal processing lubricant. In chromium and Ziegler-Natta catalyzed polypropylenes, the primary role of the metal stearate is as a neutralizer for catalyst residues. Its dissolution in the melt also facilitates polymer chain mobility and enhances melt flow. Fatty acid ethers, such as glycerol monostearate (GMS), act as antistatic additives and can also display both internal and surface lubricating properties. Migration of the additive to the surface facilitates mold release, and further helps reduce plate out of sorbitol clarifiers. Antioxidants (AOs) are additives of primary importance to improve melt processing and long-term thermal stability. These compounds hinder the propagation of free-radicals formed during exposure to heat, shear, radiation, or from catalyst residues. Pentaerythritol tetrakis(3-(3,5-di-tert-butyl-4-hydroxyphenyl)propionate) (AO1010), is a hindered phenol primary antioxidant that reacts with free-radicals, and lowers their reactivity. Phosphite-based secondary AOs are used to reduce reactive hydroxyperoxides into more stable alcohols. Tris(2,4-di-tert-butylphenyl) phosphite (AO168) used in combination with AO1010 displays synergistic properties promoting melt processing and longer term stability.

Despite the significance of polyolefin additives in commercial applications, their properties and interactions, particularly with nucleators, remain poorly understood. The common use of polymer additive blends to facilitate handling and dosing of multiple polymer additives necessitates a better understanding of their synergistic and antagonistic interactions. Furthermore, the preparation of polymer additive blends in powder form, cold compacted form, or melt blends involve differences in heat history, and the intimacy of mixing of the additives. The efficiency of DBS-based clarifiers is largely dependent on their self-assembly properties, which in turn is determined by their chemical structure. Small changes in the composition and structure of the clarifier molecules have been shown to significantly affect the fibril formation process (Singh et al., Langmuir 2017, 33, 10907).

### Summary of the Invention

The present invention provides a method for manufacturing a clarifying agent comprising the following steps:
(i) providing a composition comprising a sorbitol derivative having the formula (1): 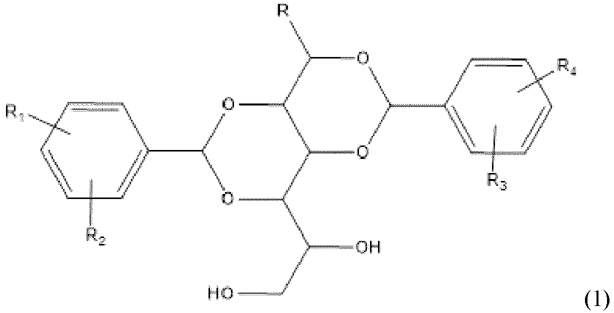
   where R is H or C₁-C₄ alkyl; and
   R₁, R₂, R₃, and R₄ are each independently H, halo, -CN or C₁-C₄ alkyl,
(ii) maintaining the composition under an inert atmosphere at a temperature at or above the transformation temperature of the sorbitol derivative and below the peak melting temperature of said sorbitol derivative for a period of at least 10 seconds, to provide fibrils of said sorbitol derivative, and
(iii) cooling said composition to below said transformation temperature.

The starting materials may be heated above the transition temperature, but below the melting point to allow formation of the fibrils. Alternatively the starting materials could be heated above the melting point, then the temperature reduced to below the melting point, but above the transition point, and then the fibrils allowed to self assemble.

The sorbitol derivative may be present in an amount of at least 5% by mass based on the total mass of the composition. In some embodiments the sorbitol derivative can be present in an amount of 50% or more based on the total mass of the composition, such as in an amount of 70% by mass or more, suitably in an amount of 80% by mass or more, for example, in an amount of 90% by mass or more, more suitably, 95% by mass or more based on the total mass of the composition. Typical ranges for the sorbitol derivative in the composition are between 20 and 80%, or between 35 and 60% by mass based on the total mass of the composition.

The fibrils may have an average length of 1000 µm or less, as determined in accordance with ASTM F1877 - 16. Suitably the fibrils may have an average length in the range of from about 0.01 µm to about 1000 µm, suitably about 0.02 µm up to about 100 µm, more suitably about 0.03 µm to about 50 µm.

The fibrils can have an average diameter in the range of from about 0.01 µm to about 10 µm as determined in accordance with ASTM F1877 - 16, suitably in the range of from about 0.01 µm to about 0.2 µm, more suitably in the range of from about 0.03 µm to 0.1 µm as determined in accordance with ASTM F1877 - 16.

During the method the temperature can be maintained at or above the transformation temperature for a period of from about 10 seconds to about 240 minutes, such as from about 60 seconds to about 120 minutes, suitably, from about 120 seconds to about 60 minutes, preferably, for about 180 seconds to about 30 minutes, more preferably about 3 minutes to about 15 minutes. The time for which the temperature must be maintained varies depending on the temperature used in the process. The times quoted above are based on a processing temperature that is close to but 5-10 °C below the Tp of the relevant sorbitol-type clarifier - in this case at a temperature of 240 °C which is close to but below the Tp of TPBMN of 246 °C .

The sorbitol derivative can be selected from the group consisting of: 1,3:2,4-dibenzylidenesorbitol (DBS), 1,3:2,4-bis(p-ethylbenzylidene)sorbitol (EDBS), 1,3:2,4-bis(*p-*methylbenzylidene)sorbitol (MDBS), 1,3:2,4-bis(3,4-dimethyldibenzylidene)-sorbitol (DMDBS), 1,2,3-tridesoxy-4,6:5,7-bis-O-[(4-propylphenyl)methylene]nonitol (TPBMN).

If the sorbitol derivative is 1,3:2,4-bis(*p*-methylbenzylidene)sorbitol, the temperature is maintained in the range 147°C to 224°C, suitably 190 °C to 220 °C.

If the sorbitol derivative is 1,3:2,4-bis(3,4-dimethyldibenzylidene)sorbitol, the temperature is maintained in the range 226°C to 272°C, suitably 240 °C to 270 °C.

If the sorbitol derivative is 1,2,3-tridesoxy-4,6:5,7-bis-O-[(4-propylphenyl) - methylene]nonitol, the temperature is maintained in the range 176°C to 244°C, suitably 210 °C to 240 °C.

If the sorbitol derivative is 1,3:2,4-dibenzylidenesorbitol (DBS), the temperature is maintained in the range 150 to 227°C suitably 170 °C to 210 °C.

If the sorbitol derivative is 1,3:2,4-bis(p-ethylbenzylidene)sorbitol (EDBS), the temperature is maintained below 212°C, suitably 180 °C to 210 °C.

The inert atmosphere can be an inert gas, for example, nitrogen, argon, carbon dioxide, helium, neon, krypton, xenon and radon. Alternatively the inert atmosphere can be achieved by maintaining the composition under reduced pressure, for example, wherein a reduced pressure is maintained in the range of from 1000 mbar to about 10⁻⁹ mbar, suitably, from about 500 mbar to about 1 mbar. It would also be possible to produce the clarifying agent in a polymer additive preblend, as long as oxygen is excluded, or at least substantially reduced compared to the atmosphere.

The composition can further comprise one or more additives. Such additives are known in the art and commonly added to provide stabilization or functionality. These can be selected from the group consisting of, hindered phenol antioxidants, phosphite antioxidants, hydroxylamines, metal stearates, hydrotalcites, antistatic agents, slip agents, hindered amine light stabilizers (HALS), ultraviolet light absorbers (UVAs), , optical brightener, and pigments. Suitable examples of phosphite antioxidants include tris(2,4-di-tert-butylphenyl) phosphite, bis (2,4-di-t-cumylphenyl) pentaerythritol diphosphite; Tetrakis(2,4-di-tert-butylphenyl)[1,1-biphenyl]-4,4'-diylbisphosphonite; tris-(2,4-di-t-butylphenyl)phosphite: bis (2,4-di-t-butylphenyl) pentaerythritol diphosphite; phosphorous acid; mixed 2,4-bis(1,1-dimethylpropyl)phenyl and 4-(1,1-dimethylpropyl)phenyl triesters; the additives sold under the tradenames Doverphos LGP11, LGP11T, LGP12;
Suitable examples of hindered phenol antioxidants include:
1,3,5-TRIS(4-tert-butyl-3-hydroxy-2,6-dimethyl benzyl)-1,3,5-triazine-2,4,6-(1H,3H,5H)-trione;
penterythritol tetrakis (3-(3,5-di-t-butyl-4-hydroxyphenol)propionate); ; 1,3,5-trimethyl-2,4,6-tis(3,5-di-tert-butyl-4-hydroxybenzyl)benzene; 1,3,5-tris(3,5-di-tert-butyl-4-hydroxybenzyl)-1,3,5-triazine-2,4,6(1h,3h,5h)-trione; Tris-(3,5-di-tert-butylhydroxybenzyl) isocyanurate; octadecyl-(3-(3,5-di-t-butyl-4-hydroxyphenol)propionate); Octadecyl 3,5-Di-(tert)-butyl-4-hydroxyhydrocinnamate;
Suitable hydroxylamines include:bis-(hydrogenated tallow alkyl) amines, oxidized;
Suitable metal stearates include:calcium stearates, zinc stearates, magnesium stearates, lithium stearates.
Suitable hydrotalcites include: Magnesium aluminium hydroxide carbonate (CAS# 11097-59-9), Magnesium aluminium zinc hydroxide carbonate, magnesium aluminium hydroxide carbonate (calcined).
Suitable antistatic agents include glycerol monostearate and ethoxylated amines.
Suitable slip agents of the present invention include erucamide, Oleamide, stearamide, behenemide, oleyl palmitamide, stearyl erucamide, ethylene bis-stearamide, and ethylene bis-oleamide.
Suitable hindered amine light stabilizers include the various secondary and tertiary methylated HALS and aminoxyamine hindered amines known in the art.
Suitable ultraviolet light absorbers include those of the benzophenone, benzotriazole and triazine types known in the art.

The composition can comprise one or more additives in an amount of from about 0.1% by mass to about 95% by mass based on the total mass of the composition, optionally 5% to 95%, optionally 5% to 60%, optionally 5 to 30% by mass based on the total mass of the composition.
The invention also provides a method for manufacturing a clarifying agent comprising the following steps:
(i) providing a composition comprising a sorbitol derivative having the formula (1): 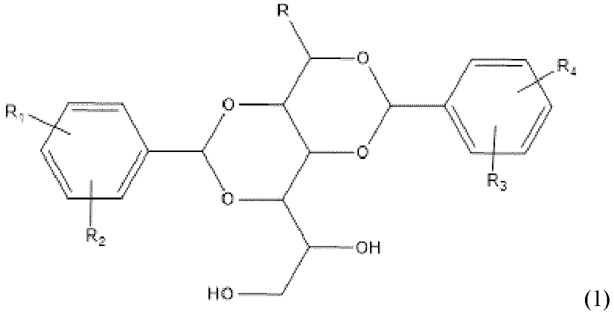
   where R is H or C₁-C₄ alkyl; and
   R₁, R₂, R₃, and R₄ are each independently H, halo, -CN or C₁-C₄ alkyl,
(ii) mixing the sorbitol derivative with one or more polymer additives:
(iii) maintaining the mixture at a temperature at or above the transformation temperature of the sorbitol derivative and below the peak melting temperature of said sorbitol derivative for a period of at least 60 seconds, to provide fibrils of said sorbitol derivative, and below the decomposition temperature of the polymer additive of step (ii):
(iv) cooling said composition to below said transformation temperature.

The process can be carried out in an inert atmosphere. The starting materials may be heated above the transition temperature of the sorbitol derivative, but below the melting point to allow formation of the fibrils. Alternatively the starting materials could be heated above the melting point, then the temperature reduced to below the melting point, but above the transition point, and then the fibrils allowed to self assemble.

The polymer additives may be selected from the group listed above. Particularly preferred additives are selected from the group consisting of glycerol monostearate, tris(2,4-di-tert-butylphenyl)phosphite and pentaerythritol tetrakis (3-(3,5-di-tert-butyl 4-hydroxyphenyl)propionate).

Also provided is a method for manufacturing a clarifying agent comprising the following steps:
providing a composition comprising a sorbitol derivative having the formula (1): 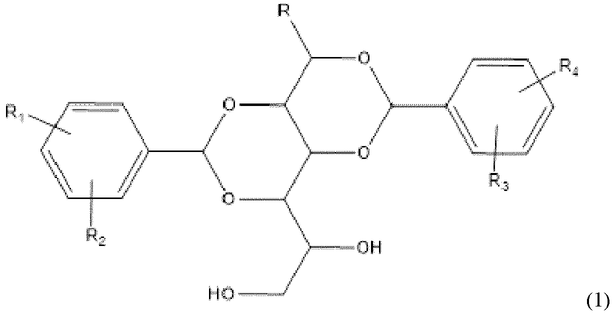
   where R is H or C₁-C₄ alkyl; and
   R₁, R₂, R₃, and R₄ are each independently H, halo, -CN or C₁-C₄ alkyl,
(ii) maintaining the mixture at a temperature at or above the transformation temperature of the sorbitol derivative and below the peak melting temperature of said sorbitol derivative, as determined in accordance with ASTM F1877 - 16: for a period of at least 10 seconds, to provide fibrils of said sorbitol derivative having an average length of 1000 mm or less,
(iv) cooling said composition to below said transformation temperature.

Suitably the fibrils may have an average length in the range of from about 0.01 µm to about 1000 mm, suitably about 0.02 µm up to about 100 µm, more suitably about 0.03 µm to about 50 µm as determined in accordance with ASTM F1877 - 16.

The fibrils can have an average diameter in the range of from about 0.01 µm to about 10 µm as determined in accordance with ASTM F1877 - 16, suitably in the range of from about 0.01 µm to about 0.2 µm, more suitably in the range of from about 0.03 µm to 0.1 µm as determined in accordance with ASTM F1877 - 16.

If the fibrils produced by treatment of the sorbitol derivative are larger than this size range, the fibrils can be reduced in size by mechanical grinding or attrition.

In another aspect the invention provides a method for clarifying a polymer comprising the following steps:
providing sorbitol derivative fibrils manufactured by the methods described above,
providing a polyolefin polymer,
heating said sorbitol derivative and said polymer, to melt the polymer, wherein said sorbitol derivative and said polymer are heated to a temperature which exceeds the peak melting temperature of polymer,
cooling the heated mixture of step (iii) to provide solidified polymer.

The polymer and the sorbitol derivative can be combined prior to heating. They may be mixed prior to heating.

The polymer may be polypropylene or poly(lactic acid)....

The polymer may be polypropylene or a co-polymer or blend thereof. Suitably, the polypropylene is bimodal or isotactic polypropylene.

The sorbitol derivative may be present in an amount of from about 500 ppm to about 5000 ppm, suitably in an amount from 1000 to 3000ppm, and suitably in an amount of from about 1500 ppm to about 2500 ppm.

The invention also provides an article of manufacture comprising solidified polymer formed by the methods described above. It may be formed by injection molding, blown film extrusion, cast extrusion, blow molding or thermoforming. It may comprises a film, a container or plastic packaging.

### Brief Description of the Drawings

The invention will be described, by way of example only, with reference to the accompanying drawings in which:
**Figure 1** shows fibrils of 1,2,3-tridesoxy-4,6:5,7-bis-O-[(4-propylphenyl) methylene]-nonitol.
**Figure 2****.** First derivatives of the TGA thermograms for (a) GMS and TBPMN blends, (b) CaSt and TBPMN blends, and (c) multi-component additives powder blends.
**Figure 3** FTIR analysis of GMS and TBPMN/GMS powder blends at room temperature and after thermal treatment under air.
**Figure 4** FTIR analysis of CaSt and TBPMN/CaSt powder blends at room temperature and after thermal treatment under air.
**Figure 5** shows the Tm obtained for TBPMN clarifier under air or nitrogen and under air in the presence of an additive.
**Figure 6****.** shows the Tc obtained for TBPMN clarifier under air or nitrogen and under air in the presence of an additive.
**Figure 7****.** Optical micrographs of a TBPMN/GMS (4/1) powder blend (a) at 20 °C and (b) at 80 °C after cooling from melt. Scale bars represent 50 *µ*m.
**Figure 8** Optical micrographs of TBPMN/CaSt (2/1 w/w) powder blend (a) at 20 °C and (b) at 80 °C after cooling from melt. Scale bars represent 50 *µ*m.
**Figure 9** Crystallization temperatures (*T*_{c}) for PP letdowns after direct powder addition of additives to PP processed with various concentrations of powdered (untreated) TBPMN at 220°C.
**Figure 10****.** Crystallization temperature for PP letdowns with various concentrations of TBPMN, and with additives first processed into pre-blends by extrusion (type D).
**Figure 11****.** Crystallization temperature for PP letdowns with various concentrations of TBPMN, and additives processed into pre-blends by extrusion (type D).
**Figure 12****.** Inert atmosphere TGA of nucleator and additives powders.
**Figure 13****.** Inert atmosphere TGA of nucleator and additives powder blends.
**Figure 14****.** Inert atmosphere TGA of nucleator and its multi-component additives powder blends.
**Figure 15****.** FTIR analysis of TBPMN at 20 °C (bottom) and after thermal treatment at 200 °C (top) under air.
**Figure 16** Crystallization temperatures (Tc) for PP letdowns after direct powder addition of additives to PP processed with 2000 ppm or 1800 ppm of TBPMN at 220°C. TBPMN was used as a powder, or thermally treated for various amounts of time under vacuum, or thermally treated under air for 5 min, or thermally treated for 1h and crushed prior use.
**Figure 17** Crystallization temperatures (T_{c}) for PP letdowns after direct powder addition of additives to PP processed with 2000 ppm of TBPMN at 220°C. TBPMN was used as a powder, or thermally treated in presence of PP and under nitrogen, or thermally treated under nitrogen, or thermally treated under vacuum, or dried in a vacuum oven prior use.
**Figure 18** Crystallization temperatures (T_{c}) for PP letdowns after direct powder addition of additives to PP processed with 2000 ppm of TBPMN at 220°C. TBPMN was used as a powder, or thermally treated alone, or thermally treated in presence of other additives prior use.
**Figure 19** Optical micrographs of TBPMN fibrils produced under vacuum or under air following heat treatment for 15 min or 1 hour. Right-hand side: Photograph of sample after treatment.
**Figure 20** Optical micrographs of TBPMN fibrils produced under vacuum or under air following heat treatment for 2 min or 5 min.
**Figure 21** Optical micrographs of TBPMN fibrils produced with other additives, under vacuum.

### Detailed Description

### Definitions

Melting temperature Tₘ: The temperature at which the thermal energy in a solid material is sufficient to overcome the intermolecular forces of attraction in the crystalline lattice so that the lattice breaks down and the material becomes a liquid, i.e. it melts. Melting is a first-order transition and occurs with an increase in entropy, volume and enthalpy. In low molecular mass materials, melting takes place over a narrow, typically 0.5-2 °C, temperature range, except in impure substances. However in polymers, due to imperfections in the crystallites, melting occurs over a much wider range of temperature, typically 10-20 °C. Nevertheless, a precise melting temperature is frequently quoted. (M. Alger, Polymer Science Dictionary, 3rd Ed. p 489.

Peak melting temperature Tp refers to the peak melting temperature, i.e. the temperature of maximum melting rate as observed, for example, in differential scanning calorimetry according to the ASTM method E794-06.

Crystallization temperature T_{c}: The temperature at which occurs the process of formation of crystalline material from a disordered aggregate of molecules. This may result from cooling a melt to below the polymer crystalline melting temperature (Tm) (melt crystallisation), from cooling or evaporating a solution (solution crystallisation), or from heating a material that has not had time to fully crystallize before becoming frozen (cold crystallization). (M. Alger, Polymer Science Dictionary, 3rd Ed. p 173.)

Peak crystallization temperature: The peak crystallization temperature is defined as the temperature of maximum crystallization rate as observed, for example, in differential scanning calorimetry according to the ASTM method E794-06 (Tc).

Transformation temperature T_{t:} The lowest temperature or temperature range at which pronounced changes in the properties of a material occur, associated with the onset of particular modes of molecular motion, especially regarding the change in morphology and structure. The transformation temperature refers particularly to the structural reorganization of a compound or composition into a fibrillar or elongated structure, upon heating or cooling, and is measured for example by heating/cooling a sample on a hot-stage, at a heating/cooling rate of 2 °C/min on a glass substrate, and monitoring structural changes by optical microscopy or x-ray diffraction.

Degradation temperature: Tₒ Temperature at which occurs the breaking down of large molecules to smaller molecules and/or a reaction of the molecular components changing the properties of the polymer.

Decomposition temperature T_{d}: The temperature at which the molecules of a material or substance start to decompose (breakdown) into two or more fragments. It can be determined for instance as described in ASTM E2550 - 17.

The transformation temperature and the melting temperatures, as determined by DSC for the sorbitols described herein are as follows:

| Compound | Tₜ Transformation Temperature °C | Tm Melting Temperature °C |
|---|---|---|
| DBS | 150-158 | 216-228 |
| EDBS | < 212 | 212-217 |
| MDBS | 147.5 | 225.8 |
| DMDBS | 226.0 | 273.7 |
| TPBMN | 176.0 | 245.7 |

The peak melting and crystallisation temperatures can be determined by ASTM standard E794-06 (reapproved 2018).

The present invention is concerned with increasing the clarity of a polymer, such as a polyolefin, through a unique processing of benzylidene sorbitol derivative nucleating agents, and the incorporation of same with said polymer.

The dibenzylidene sorbitol derivative has the formula: 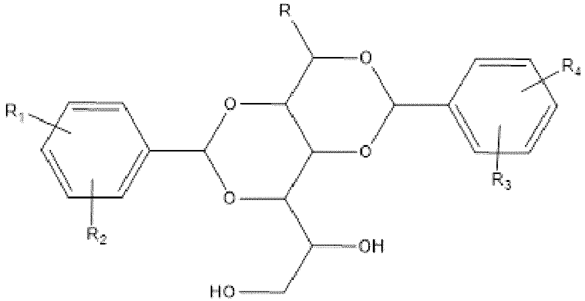
where R is H or C₁-C₄ alkyl; and
R₁, R₂, R₃, and R₄ are each independently H, halo, -CN or C₁-C₄ alkyl.
R may be H, methyl, ethyl, propyl, butyl and isomers thereof. For example, R may be H, methyl, ethyl, n-propyl, cyclopropyl, isopropyl, n-butyl, iso-butyl, sec-butyl, tert-butyl, cyclobutyl.
R¹, R², R³ and R⁴ may each independently be a halo selected from F, Cl, Br and I.
R₁, R₂, R₃, and R₄ may each independently be C₁-C₄ alkyl, accordingly, R₁, R₂, R₃, and R₄ may each independently be selected from H, methyl, ethyl, propyl, butyl and isomers thereof. Suitably, R₁, R₂, R₃, and R₄ may each independently be selected from H, methyl, ethyl, n-propyl, cyclopropyl, isopropyl, n-butyl, iso-butyl, sec-butyl, tert-butyl, cyclobutyl.

Suitably, the dibenzylidene sorbitol derivative is selected from is selected from the group consisting of 1.3:2,4-dibenzylidene sorbitol; 1.3:2,4-di(p-methylbenzylidene) sorbitol: 1.3:2,4-di(p-chlorobenzylidene) sorbitol: 1.3:2,4-di(2,4-dimethyldibenzylidene) sorbitol; 1.3:2,4-di(p-ethylbenzylidene) sorbitol; 1.3:2.4-di(3,4-dimethyldibenzylidene) sorbitol; and 1,2,3-tridesoxy-4,6:5,7-bis-O-[(4-propylphenyl)methylene] -nonitol.

The dibenzylidene sorbitol derivative may be a mono(3-chloro-4-methylbenzylidene)-D-sorbitol; a mono(3,4-dimethoxybenzylidene)-D-sorbitol; a mono(3-ethyl-4-methylbenzylidene)-D-sorbitol; a mono(3-methyl-4-ethylbenzylidene)-D-sorbitol; a mono(3-propyl-4-methylbenzylidene)-D-sorbitol; a mono(3,4-diethylbenzylidene)-D-sorbitol; a mono(3,4-dichlorobenzylidene)-D-sorbitol; a mono(3,4-dimethylbenzylidene)-D-sorbitol; a mono(3,4-dipropylbenzylidene)-D-sorbitol; a mono(3,4-diethoxybenzylidene)-D-sorbitol; a mono(3,4-diisopropoxybenzylidene)-D-sorbitol and like sorbitol derivatives; a mono(3-ethyl-4-methylbenzylidene)-xylitol, a mono(3-methyl-4-ethylbenzylidene)-xylitol, a mono(3-propyl-4-methylbenzylidene)-xylitol, a mono(3,4-diethylbenzylidene)-xylitol, a mono(3,4-dichlorobenzylidene)-xylitol, a mono(3,4-dimethylbenzylidene)-Xylitol, a mono(3,4-dipropylbenzylidene)-xylitol, a mono(3-chloro-4-methylbenzylidene)-xylitol, a mono(3,4-dimethoxybenzylidene)-D-xylitol and like xylitol derivatives, and mixtures thereof.

Examples of the polymer used in the invention include polyolefin-based resins including C-olefin polymers such as low-density polyethylenes, linear low-density polyethylenes, high-density polyethylenes, isotactic polypropylenes, syndiotactic polypropylenes, hemi isotactic polypropylenes, cycle-olefin polymers, stereo block polypropylenes, poly-3-methyl-1-butene, poly-3-methyl-1-pentene and poly-4-methyl-1-pentene; and C-olefin copolymer such as ethylene/propylene block or random copolymers as well as polyester materials such as poly (lactic acid).

In a preferred embodiment, the thermoplastic polymer is polypropylene polymer. For example, the polypropylene may be selected from the group consisting of polypropylene homopolymers (e.g., atactic polypropylene homopolymer, isotactic polypropylene homopolymer, and syndiotactic polypropylene homopolymer), polypropylene copolymers (e.g., polypropylene random copolymers), polypropylene impact copolymers, and mixtures thereof. Suitable polypropylene copolymers include, but are not limited to, random copolymers made from the polymerization of propylene in the presence of a comonomer selected from the group consisting of ethylene, but-1-ene (i.e., 1-butene), and hex-1-ene (i.e., 1-hexene).

The method of producing the clarifying agent structure of the present invention is not restricted as long as the clarifying agent is structured by heating the compound in a suitable temperature range, for instance 80 °C to 270° C, under an inert atmosphere, or by using a suitable solvent, or a combination of both, or by using a supportive substrate, or in one or a blend of other polymer additives or by using radiation. Suitable additives include, but are not limited to hindered phenol and phosphite antioxidants, catalyst neutralisers, slips and anti-static additives.

The pre-structured nucleator of the present invention, may be further passed through a filtering mesh, crushed, ground, compacted, pelletized, densified or otherwise mechanically altered by any other technique known by those skilled in the art, in order to adjust the physical form and handling properties of the organogelator.

The polymer composition of the present invention can be produced by a conventionally known method. The method of incorporating the structured nucleating/clarifying agent composition of the present invention into the polymer is not particularly restricted, and a conventionally known method can be employed. For example, the benzylidene sorbitol compound represented by the Formula (1), can be added either directly to the polymerisation reactor, or more commonly after the reactor, in a post-reactor extrusion operation, or after the polymer is sold onwards by compounders or converters. The nucleator can be added directly, by itself, or it can be combined with other polymer additives and optionally the polymer, at high concentrations of nucleator, in a powder mix. The addition can be either batchwise or continuous.

The structured clarifying agent composition of the present invention may further contain other additive(s) in addition to the above-described mixture as long as the amount thereof is within a range that does not impair the effects of the present invention. Examples of other additives include a phenolic antioxidant, a phosphorus-based antioxidant, a thioether-based antioxidant, an ultraviolet absorber, a hindered amine compound, a flame retardant, a nucleating agent, a filler, an antistatic agent, a heavy metal inactivator, a metallic soap, a hydrotalcite, a pigment, a dye, a plasticizer, an anti-blocking agent, and a mineral oil.

### Examples

The present invention will now be described more concretely by way of examples thereof; however, the present invention is not restricted to the following examples and the like by any means.

### Example 1

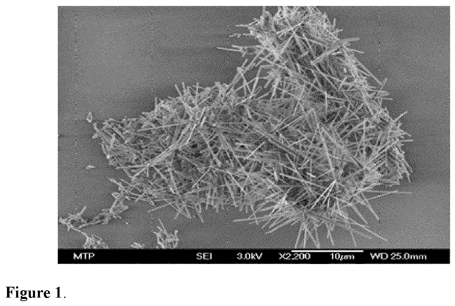

1,2,3-trideoxy-4,6:5,7-bis-O-[(4-propylphenyl)methylene]nonitol (TBPMN) (Millad® NX8000), was obtained from Milliken (USA), and dried in a vacuum oven at 3.5 kPa and 60 °C for 8 h prior to use. Isotactic polypropylene (PP526P, melt flow rate, at 230 °C and 2.16 kg: 8 g/10 min, density: 905 kg/m3) was obtained from Sabic®.
Step 1: The TBPMN powder was placed in a glass vial and flushed with nitrogen gas for 1 h. The vial was sealed with Teflon tape under a nitrogen environment, and introduced in a pre-heated oven at 240 °C, and kept at 240 °C for 1 h. No stirring was applied. The vial was removed from the oven, and cooled to room temperature. The vial was then open, and the sample was exposed to air at room temperature and recovered with a spatula. The TBPMN sample was composed of fibrils (Figure 1).
Step 2: The fibrillar 1,2,3-tridesoxy-4,6:5,7-bis-O-[(4-propylphenyl) methylene]-nonitol was added to isotactic polypropylene pellets (PP526P) in a ratio of 0.15 weight percent and 99.85 weight percent respectively, and mixed with a high-speed mixer. The composition was then further added to a Plasti-Corder Lab-Station Brabender internal mixer, and mixed at 35 rpm, 220 °C, for 5 min. After cooling to room temperature, the polymer was removed from the mixer, and a sample was taken for subsequent DSC analysis.

Differential scanning calorimetry (DSC) was used to determine the temperature of the crystallization peak maximum (Tp). Aluminum pans were sealed under air with 5-10 mg of sample. Scans were performed by heating from 30 °C to 200 °C at 10 °C/min, maintaining at 200 °C for 1 minute, and cooling from 200 °C to 30 °C at 10 °C/min.
Table 1 compares the Tp obtained to an isotactic polypropylene resin processed in the same way as step 2 but without clarifier, and an isotactic polypropylene resin processed in the same way as step 2 with a powder clarifier.

**Table 1 Peak crystallization temperatures and enthalpy of crystallization for different compositions melt blended.**

| **Composition** | **Peak crystallization temperature (°C)** | **Enthalpy of crystallization (J/g)** |
|---|---|---|
| iPP | 114.76 | -89.146 |
| iPP + TBPMN (1500 ppm) | 117.39 | -88.082 |
| iPP + structured TBPMN (1500 ppm) | 126.50 | -100.143 |

### Example 2

1,2,3-trideoxy-4,6:5,7-bis-O-[(4-propylphenyl)methylene]nonitol (TBPMN) (Millad® NX8000), was obtained from Milliken (USA), and dried in a vacuum oven at 3.5 kPa and 60 °C for 8 h prior to use. Isotactic polypropylene (PP526P, melt flow rate, at 230 °C and 2.16 kg: 8 g/10 min, density: 905 kg/m3) was obtained from Sabic®.

Isotactic polypropylene (2.8 g) was added to a mini-extruder which was first pre-heated to 180 °C and placed under a nitrogen flow. The clarifying agent (6.3 mg), prepared according to Step 1 of example 1, was then added immediately and the rest of the PP was added subsequently (0.21 g). Nitrogen was used to purge air from the throat of the mini-extruder. Mixing was performed at 180 °C for 5 min in a closed loop, and the mixture was then extruded and cooled under air to room temperature.

Differential scanning calorimetry (DSC) was used to determine the temperature of the melting peak maximum (Tp). Aluminum pans were sealed under air with 5-10 mg of sample. Scans were performed by heating from 30 °C to 200 °C at 10 °C/min, maintaining at 200 °C for 1 minute, and cooling from 200 °C to 30 °C at 10 °C/min (2 cycles).

Table 2 compares the *T*ₚ obtained to an isotactic polypropylene resin processed in the same way as step 2 but without clarifier, and an isotactic polypropylene resin processed in the same way as step 2 with a powder clarifier.

**Table 2 Peak crystallization temperatures and enthalpy of crystallization for different composition extruded.**

| **Composition** | **Peak crystallization temperature (°C)** | **Enthalpy of crystallization (J/g)** |
|---|---|---|
| iPP | 120.3 | -91.89 |
| iPP + TBPMN (2000 ppm) | 123.8 | -94.36 |
| iPP + structured TBPMN (2000 ppm) | 127.2 | -93.20 |

### Example 3

### Materials

1,2,3-trideoxy-4,6:5,7-bis-O-[(4-propylphenyl)methylene]nonitol (TBPMN) (Millad® NX8000), was obtained from Milliken (USA), and dried in a vacuum oven at 60 °C for 12 h prior to use. Calcium distearate (CaSt) was obtained from Baerlocher (Ceasit® FI Veg), and Mg-Al hydrotalcite (DHT) was provided by Kyowa Chemical Industry. Glycerol monostearate (GMS) was purchased from Riken (Rikemal® AS-005). Pentaerythritol tetrakis(3-(3,5-di-tert-butyl-4-hydroxyphenyl)propionate) (AO1010, Evernox®-10) and tris(2,4-di-tert-butylphenyl) phosphite (AO168, Everfos®-168) were purchased from Everspring Chemical. Isotactic polypropylene (melt flow rate, at 230 °C and 2.16 kg: 8 g/10 min, density: 905 kg/m³) was provided by Sabic®.

### Characterization techniques and sample preparation

Thermal gravimetric analysis (TGA) was performed on a TA Instruments TGA 550 equipped with an autosampler, under N₂ or air atmosphere. Approximately 3-10 mg of sample was used for each measurement. The temperature was equilibrated for 1 min at 30 °C, and increased to 650 °C at a rate of 10 °C/min.

Differential scanning calorimetry (DSC) was performed with a Perkin Elmer Pyris 1 equipped with liquid nitrogen cooling. Aluminum pans were sealed under air with 5-10 mg of sample. The measurement with TBPMN under nitrogen was performed with a pan sealed in a glove box under nitrogen atmosphere. Scans were performed at 10 °C/min.

The chemical composition was characterized by Fourier-transform infrared spectroscopy (FTIR) with a Bruker ALPHA equipped with the platinum single reflection diamond ATR QuickSnap™ sampling module.

The self-assembled structure of TBPMN was studied with a hot stage (Linkam T-95) and imaged with a polarized light optical microscope (PLOM, Olympus BX60F-3). The sample was first deposited on a glass slide with a cover slip. The measurements were done under nitrogen or air flow. The thermal cycles were as follows: the sample was heated from 25 °C to the melting temperature (*T*ₘ), kept at *T*ₘ for 5 min, and cooled to 25 °C. The heating and cooling rates were 10 °C/min.

Formulated polypropylene was prepared by first dry-mixing the additive powders and polymer pellets, followed by addition to a Plasti-Corder Lab-Station Brabender internal mixer, operating at 220 °C for 5 min at 35 rpm. Alternately, a melt-formed polymer additive preblend (Superblend™ Type D, Ingenia Polymers) was prepared by dry extrusion of the nucleator and polymer additives at 800 rpm using a Krauss Maffei ZE 25 twin-screw extruder. Nitrogen was applied at the throat of the extruder. The extrusion temperature used was 85 °C for TBPMN/GMS (1/1 w/w) [Type D1], 135 °C for TBPMN/AO1010 (4/1 w/w) [Type D2], 185 °C for TBPMN/AO168/AO1010 (4/2/1) [Type D3], and 115 °C for all the other formulations. The Type D additive preblend was then blended with polymer pellets, followed by addition to a Plasti-corder Lab-Station Brabender under identical conditions to the powder blends.

### Results and discussion

### Thermal stability

The chemical structures of the nucleator and selected additives are shown below. The thermal stability of each compound was determined by TGA under inert atmosphere (Table 3). TBPMN displayed a high thermal stability, with an extrapolated onset degradation temperature (*T*ₒ) of 278 °C and maximum rate of decomposition temperature (*T*_{d}) of 300 °C. The linear degradation rate under isothermal condition at 250 °C was 0.83 wt%/min (not shown). Measurements performed under air decreased *T*ₒ to 231 °C, highlighting the susceptibility of the nucleator to oxidative degradation. To exclude the effect of oxidation, all further TGA measurements were carried under inert atmosphere, unless otherwise stated.

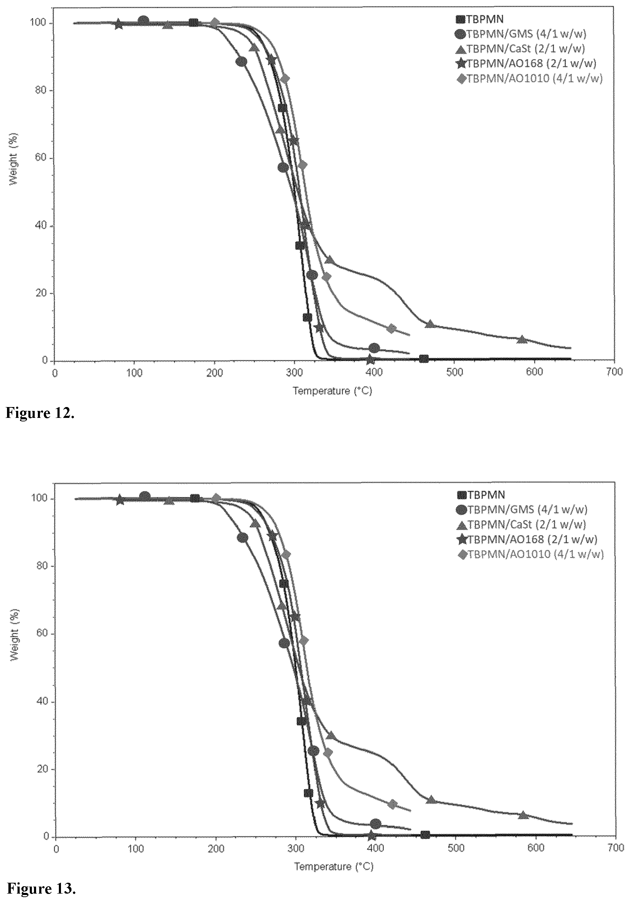

Both GMS and AO168 pyrolyzed at a lower temperature than the clarifier, while CaSt and AO1010 displayed a *T*ₒ above 369 °C (Table 3, Figure 12). It is noteworthy that GMS exhibited two decomposition temperatures at 240 °C and 360 °C. Commercial GMS samples are commonly constituted of mixtures of mono-, di-, and tri-ester glycerol compounds, with alkyl chain derivatives of stearic and palmitic acids. The latter fatty acids have a marked difference in decomposition temperatures, ca. 327 °C and 261 °C respectively.(Chen et al. RSC Adv. 2017, 7 (26), 15625-15631 and Agrawal et al, Ceram. Int. 2017, 43 (16), 14271-14276) The higher molar mass compounds assigned to glycerol monostearates accounted for 46 wt% of the GMS additive. CaSt was constituted of 1 mole (3 wt%) of water of crystallization, which was lost around 100 °C (Figure 12). (Sherman & Kern, Acid Scavengers for Polyethylene. In Handbook of Industrial Polyethylene Technology; Spalding, M. A., Chatterjee, A. M., Eds.; Scrivener Publishing: Beverly, MA, 2016; pp 793-820).

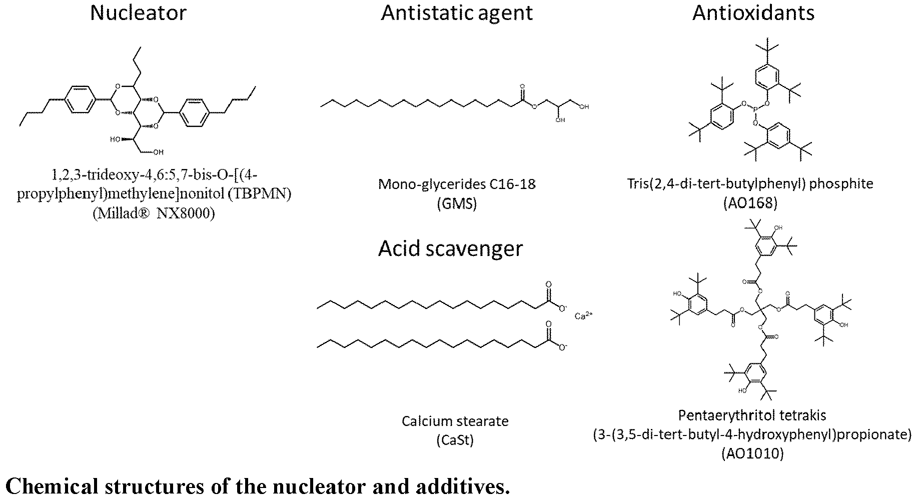

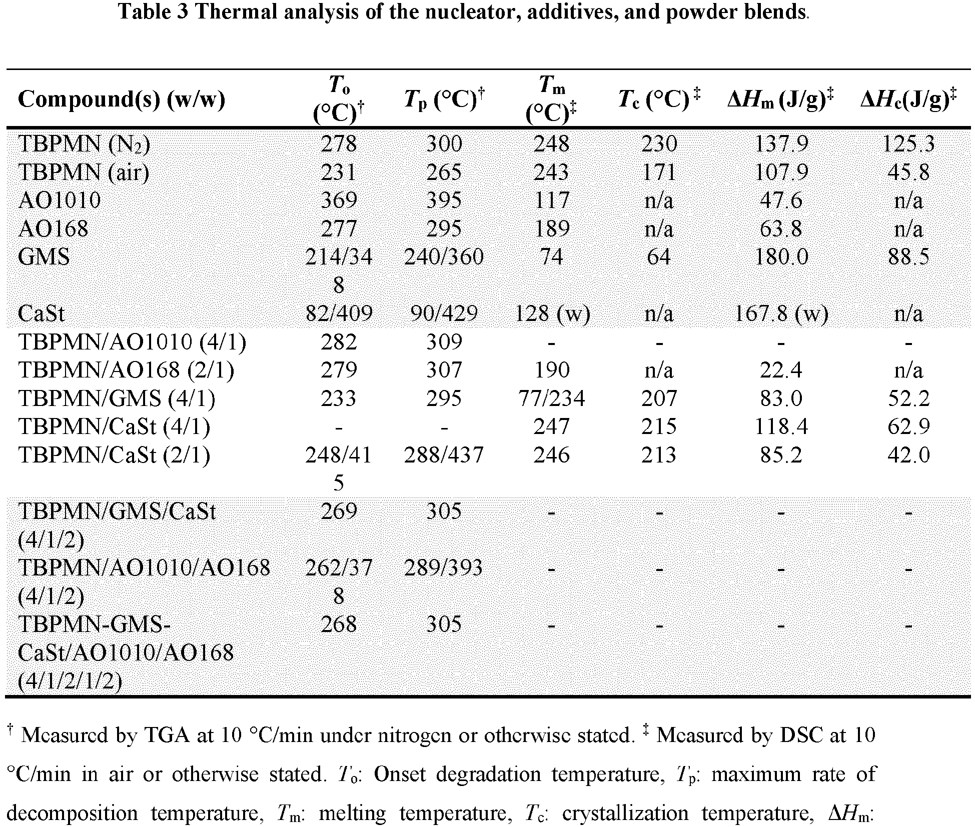

enthalpy of melting, Δ*H*_{c}: enthalpy of crystallization, n/a: non-applicable, w: evaporation of water and liquid crystal phase.

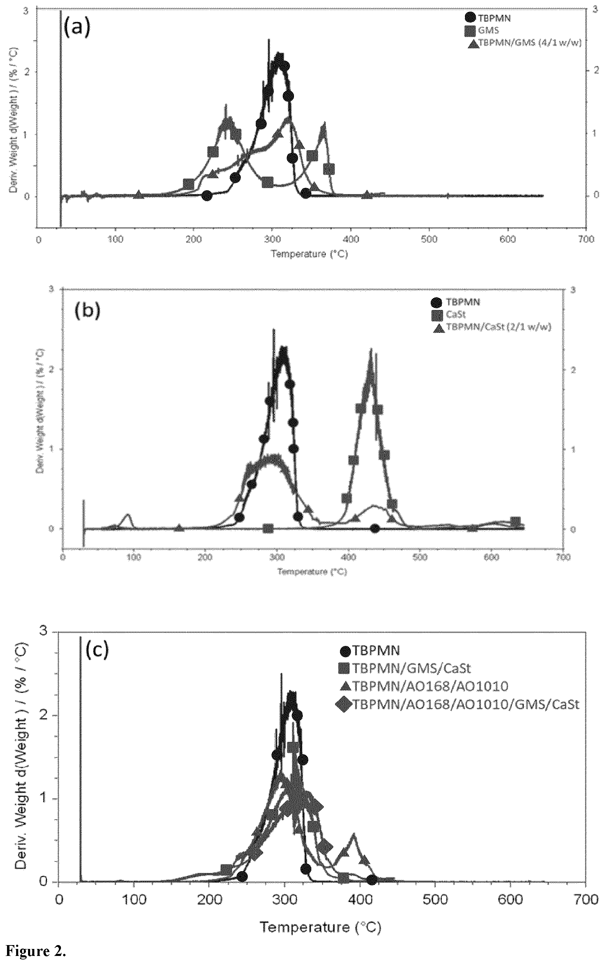

Blending TBPMN with the fatty acids-based compounds lowered the thermal stability of the clarifier (Table 3, Figure 12). Accounting for the loss of GMS, the onset degradation of TBPMN/GMS (4/1 w/w) was 233 °C (Figure 2a). *T*ₒ of TBPMN was decreased by 30 °C in presence of CaSt (Figure 2b). These temperatures represent therefore an upper limit for the processing window of nucleator/additives blends. A mixture of TBPMN with both GMS and CaSt displayed a thermal stability comparable to that of mixtures prepared with only one additive, as shown in Table 3.

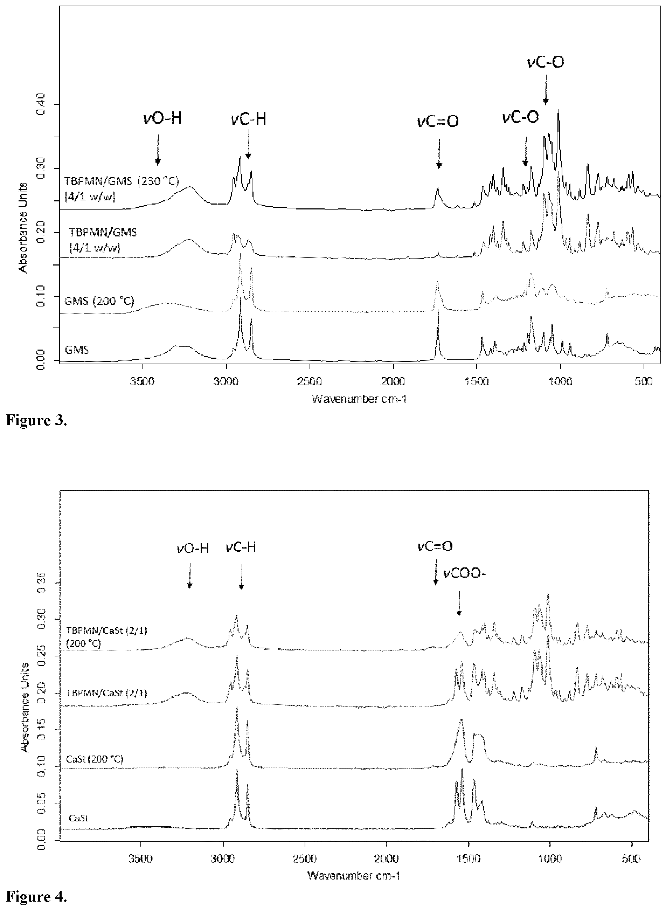

Inversely, blending of one antioxidant (AO1010, AO168) with the clarifier resulted in an improvement in the overall thermal stability (Table 3, Figure 12). When both antioxidants were combined, *T*ₒ decreased slightly; but notably, a fraction of the sample remained stable up to 378 °C (Fig. 4c). The thermal stability was further improved when all four additives were added, suggesting synergistic interactions between the components.

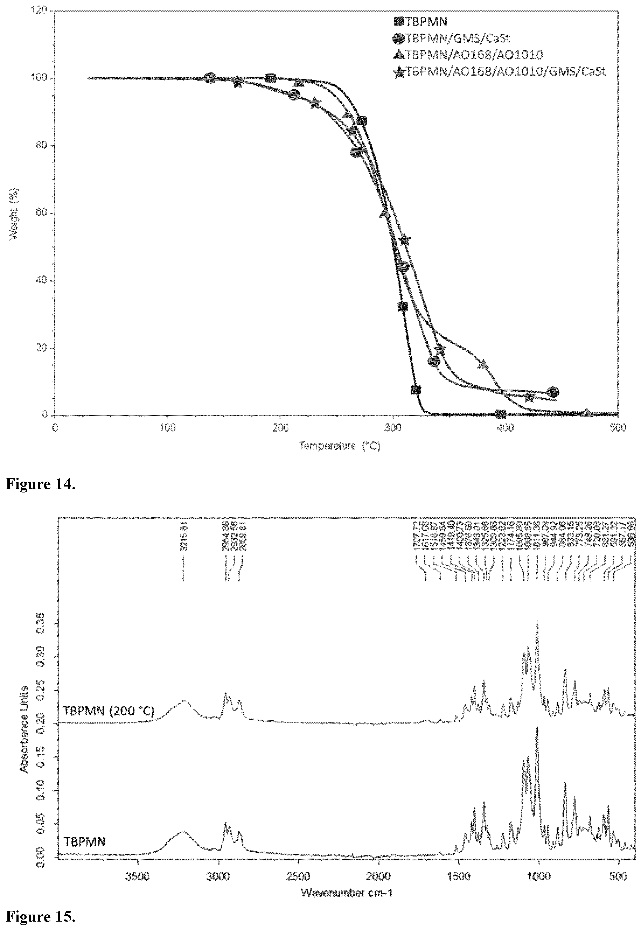

The lower thermal stability of GMS is expected to yield reactive species that can hydrolyze the nonitol clarifier. No change in composition was evident from FTIR analysis after heating TBPMN to 200 °C (Figure 15). However, TBPMN/GMS powder blends showed evidence of a degradation mechanism upon heating, with appearance of a broad peak in the region 3300-3600 cm⁻¹, assigned to -OH stretching vibration modes, at 1731 cm⁻¹ (vC=O), and at 1270 cm⁻¹ and 1197 cm⁻¹ (vC-O) (Figure 3). FTIR analysis of the TBPMN/CaSt mixture heated to 200 °C revealed peaks at 1720 cm⁻¹, assigned C=O stretching modes, 1548 cm⁻¹ (vCOO⁻) and peak broadening at 1551 cm⁻¹ (Figure 4). The data suggested a different degradation mechanism than with GMS.

### Crystallization and self-assembly of the clarifier

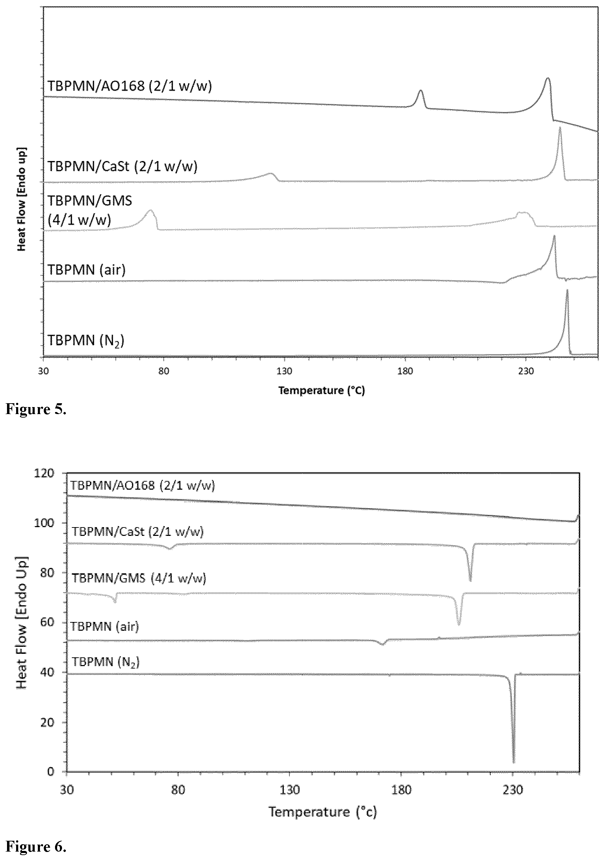

Further investigation on the thermal stability of the clarifier and powder blends was carried out by DSC. As shown in Figure 5, under inert atmosphere TBPMN displayed a sharp melting peak at 247.95 °C. The deleterious effect of oxygen was apparent from comparable measurements performed under air. The melting point decreased by about 5 °C, and an exothermic event associated to thermal degradation appeared above 199.1 °C. Degradation of the clarifier was already noted above 231 °C from TGA measurements.
Upon cooling, recrystallization of the clarifier under inert atmosphere occurred below 231.01 °C, with only a small decrease in the enthalpy (Figure 6, and Table 3). From the same measurement performed under air, only small exothermic peaks were apparent below 173.94 °C, revealing the inability of the oxidized clarifier to recrystallize. This was confirmed by optical microscopy, and no or only a few were formed upon cooling of TBPMN from the melt. Since the efficiency of the nucleator is dependent on its self-assembly properties, it is expected that oxidation will deactivate the clarifier, as further discussed below.

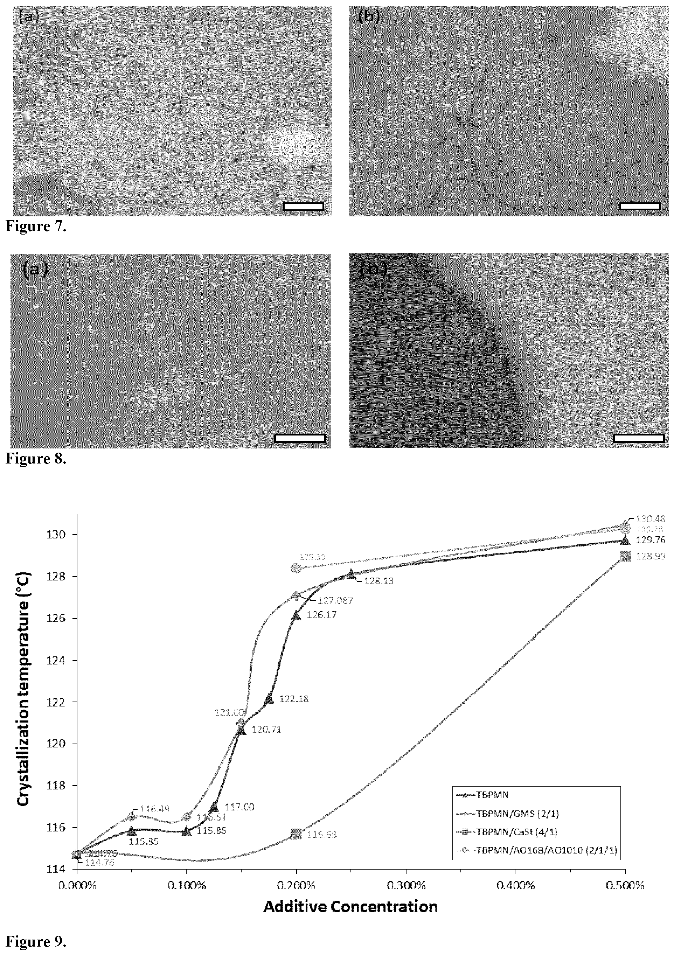

The addition of GMS to the clarifier resulted in a broadening of the melting range, as shown in Figure 5. GMS melted above 74.4 °C and lowered the melting point of TBPMN to 160 °C, as evidenced by the two exothermic peaks. A colligative effect may account for the lower melting point. However, evidence for the oxidation of GMS upon heating, from FTIR analysis, suggests formation of lower mass species such as fatty acids that may further react with TBPMN Noteworthy, upon cooling a sharp recrystallization peak was still present, comparable to the crystallization peak of TBPMN in absence of oxygen but at a lower temperature and with a lower enthalpy of crystallization (Figure 6). This result suggests that GMS or its partial oxidative degradation could act as a barrier against the oxidation of the clarifier. The ability of the nucleator to form fibrils was confirmed by optical microscopy (Figure 7). Upon cooling from the melt, fibrils less than 5 *µ*m in diameter and over 300 *µ*m in length formed and were distributed in liquid GMS.

The thermal behavior for powder blends of the clarifier and CaSt is shown in Figures 5 and 6. Separation of the crystallization water and loss of the CaSt crystalline structure occurred around 125 °C. Above this temperature, CaSt has been reported to form a viscous melt. The crystalline structure of TBPMN however was not affected, and a sharp melting peak was measured at 246.4 °C. A slightly lower enthalpy of crystallization suggests a lower efficiency for CaSt to protect the clarifier against oxidation. A lower amount of CaSt (4/1 w/w) proved even more effective at protecting the nucleator from oxidation (Table 3). TGA data revealed that the thermal degradation temperature of TBPMN/CaSt blend is close to CaSt melting point. In comparison to the effect of GMS, the metal stearate or its oxidative degradation may help protect the nucleator from further oxidation. Optical microscopy revealed the formation of a dense network of thin fibrils upon cooling (Figure 8). Much shorter fibrils, about 40 *µ*m in length, were formed suggesting hindering of the self-assembly process.

DSC analysis of AO168 under air indicated no change in the enthalpy of fusion after heating to 220 °C, suggesting good thermal stability and recrystallization of the compound. However, under the same conditions no further melting peak was present after a first heating cycle for AO1010. This is an indication of the amorphous structure of the compound after melting.¹⁹ Mixtures of TBPMN/AO168 proved sensitive to degradation, and no crystallization peak occurred upon cooling (Figures 5 and 6).

### Nucleation efficiency

The nucleation efficiency of TBPMN was evaluated by measuring the crystallization temperature (*T*_{c}) of isotactic PP blends processed at 220 °C. An increase in *T*_{c} has been quantitatively associated to an improvement in the clarifying properties of the additive. TBPMN was shown to dissolve in PP melt, and to form a fibrillar network upon cooling. Above a critical concentration, a sharp increase in *T*_{c} is associated with network formation and epitaxial interaction with the polymer chains.²¹

As shown in Figure 91 *T*_{c} increased rapidly when the concentration of TBPMN was above 1000 ppm, and reached a plateau above 2000 ppm. The blends prepared with TBPMN/GMS (2/1 w/w) displayed a comparable trend, but with a higher *T*_{c} above 1500 ppm. As shown above, although GMS impacted the melting behavior of the clarifier, it may rather provide protection against oxidation or promote dispersion of the clarifier during melt.

CaSt resulted in the significant deactivation of the nucleator at 2000 ppm. As already observed by optical microscopy, the fibrils growth was hindered in presence of CaSt, and FTIR measurements suggested interaction with clarifier molecules. In addition, CaSt was shown to be detrimental to PP during processing by promoting oxidative degradation.

Antioxidants proved the most beneficial to the nucleation efficiency, and *T*_{c} reached 128.4 °C at 2000 ppm. This is further indication of the need to protect the clarifier from oxidation during processing for optimizing the performance.

### Processing conditions

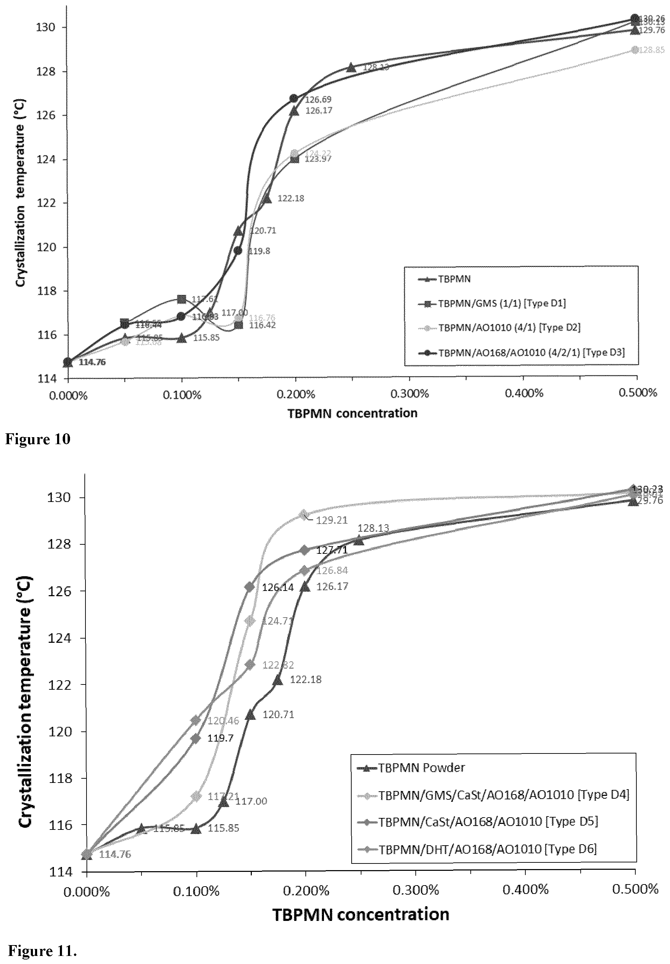

The processing conditions were of importance when mixing nucleators and additives. GMS and AO1010 were preblended with the nucleator (Type D1 and D2, respectively) at relatively low temperatures and with nitrogen blanketing the feed throat of the extruder to minimize thermal degradation. However, the nucleation efficiency of these preblends was lower than for formulations prepared from powders (Figure 10). Although both GMS and AO1010 were found to promote dispersion and minimize oxidation, interactions during processing lowered the nucleation efficiency of TBPMN When both antioxidants were combined (Type D3), a good performance was obtained comparable to that of the nucleator alone. This suggests that the synergistic contribution of the antioxidants or their larger amount helped prevent nucleator deactivation.

The highest nucleation performance was obtained from preblends containing all the additives (Type D4, Figure 11). This supports the previous hypothesis that the nucleator benefits from protection against oxidation from the antioxidants, and dispersion of the nucleator and additives in PP is favored by the presence of lubricating compounds (Type D5). This processing method was effective with other acid scavenger additives such as DHT (Type D6).

### Conclusions

The interactions between the polypropylene clarifying agent TBPMN, and four additives, namely; calcium stearate, glycerol monosterate, AO1010 and AO168 was studied. TBPMN displayed good thermal stability but was susceptible to oxidative degradation under air, which was detrimental to its nucleation efficiency. In presence of GMS or CaSt, the thermal stability was slightly lowered, but the dry powder preblends proved beneficial to protect TBPMN against further oxidation. GMS was found to dissociate into fatty acids at elevated temperatures while CaSt yielded carbonylated compounds. Fibrils formation was demonstrated both in GMS and CaSt after melting, however, thinner fibrillar structures were formed in presence of the latter.

When combined with PP, powder blends of the nucleator and GMS displayed enhanced nucleation efficiency. Protection from oxidation and improved dispersion in PP may account for the synergistic properties observed. CaSt was less effective and rather lowered the crystallization temperature of the nucleator. The use of antioxidants with the nucleator was beneficial and improved the nucleation performance, although DSC thermograms showed an inhibition of the crystallization of the nucleator at high concentration. Pre-melt processing of the additives, as a Type D Superblend™, prior to their addition to the polymer proved a suitable route, provided that both antioxidants are present.

### Example 4

**Materials:** 1,2,3-trideoxy-4,6:5,7-bis-O-[(4-propylphenyl)methylene]nonitol (TBPMN) (Millad® NX8000), was obtained from Milliken (USA), and dried in a vacuum oven at 60 °C for 12 h prior to use. Isotactic polypropylene (melt flow rate, at 230 °C and 2.16 kg: 8 g/10 min, density: 905 kg/m³) was provided by Sabic®.

### Sample preparation and characterization techniques

The TBPMN powder (0.2 g) was placed in a glass vial and capped with an Al foil perforated with small holes. The vial was placed on its side in a vacuum oven, pre-heated to 240 °C. The oven was either immediately evacuated to about -0.09 MPa (25 Torr) or kept under atmospheric pressure and air. The sample was then maintained at 240 °C for the desired amount of time (2 min, 5 min, 15 min or 1 h). The pressure was then returned to atmospheric pressure, and the vial cool down to room temperature under air. No stirring was applied during the thermal treatment. The sample was recovered carefully with a spatula, or was first crushed thoroughly with a spatula before recovery.

Formulated polypropylene was prepared by first adding the polymer pellets (43.7 g) to a Haake PolyLab QC pre-heated to 220 °C under air, and closing the pneumatic ram. The polymer was melted for 1 min at 35 rpm and 220 °C. The ram was raised, and the TBPMN sample (0.0876 g, 0.2 wt%) was added to the mixer rotating at 35 rpm. The pneumatic ram was lowered, and mixing was continued for 5 min at 35 rpm and 220 °C. The mixing was stopped, and the temperature lowered to room temperature, before recovery of the polymer or polymer mixture. The same steps were performed for the neat iPP sample, but without addition of the nucleator.

The polymer or polymer mixture were pressed using a Fontijne Holland hydraulic hot press. The sample was first cut into small pieces about 0.5 cm x 0.5 cm, and placed on a mold (10 cm x 3 cm, thickness 500 µm). The mold was covered with Teflon sheets and placed between two metal plates. The plates were then introduced in the press, which was pre-heated to 190 °C. The sample was kept at 190 °C for 5 min with no applied pressure, then pressed at 150 kN for 5 min at 190 °C. The pressure was released (0 kN) and the temperature lowered to room temperature. A section of the film was cut for DSC analysis.

Differential scanning calorimetry (DSC) was performed with a Perkin Elmer Pyris 1 equipped with liquid nitrogen cooling. Aluminum pans were sealed under air with 5-10 mg of sample. The temperature of the melting peak maximum (*T*ₚ) was obtained by performing thermal scans by heating from 30 °C to 200 °C at 10 °C/min, maintaining at 200 °C for 1 minute, and cooling from 200 °C to 30 °C at 10 °C/min, and maintaining at 30 °C for 1 min (2 cycles).

The self-assembled structure of TBPMN was imaged with a polarized light optical microscope (PLOM, Olympus BX60F-3). The sample was first deposited on a glass slide with a cover slip. The measurements were done under air.

### Results

The effect of thermal treatment of TBPMN on the temperature of crystallisation (Tp) after blending with PP was studied. TBPMN as NX8000J (obtained from Milliken) was subjected to thermal treatment at 240 °C for 0 minute, 2 minutes, 5 minutes, 15 minutes or one hour. The thermal treatment was carried out under vacuum or under air. TBPMN was then formulated in iPP at 2000 parts per million with or without pre-crushing of the fibrils formed following the thermal treatment step.

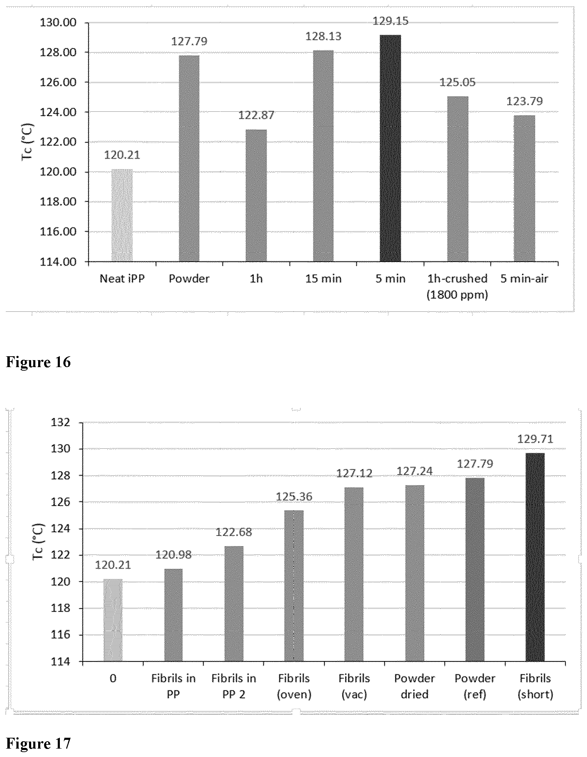

Figures 16 and 17 show the temperature of crystallization (*T*ₚ) for the various treatment steps. It can be seen that *T*ₚ increased with shorter heating times, up to 5 min and that thermal treatment under air lowered performance when compared to treatment under vacuum. The length of the fibrils increased with the length of the thermal treatment. Crushing long fibrils increased the *T*ₚ but also broadened the *T*ₚ range.

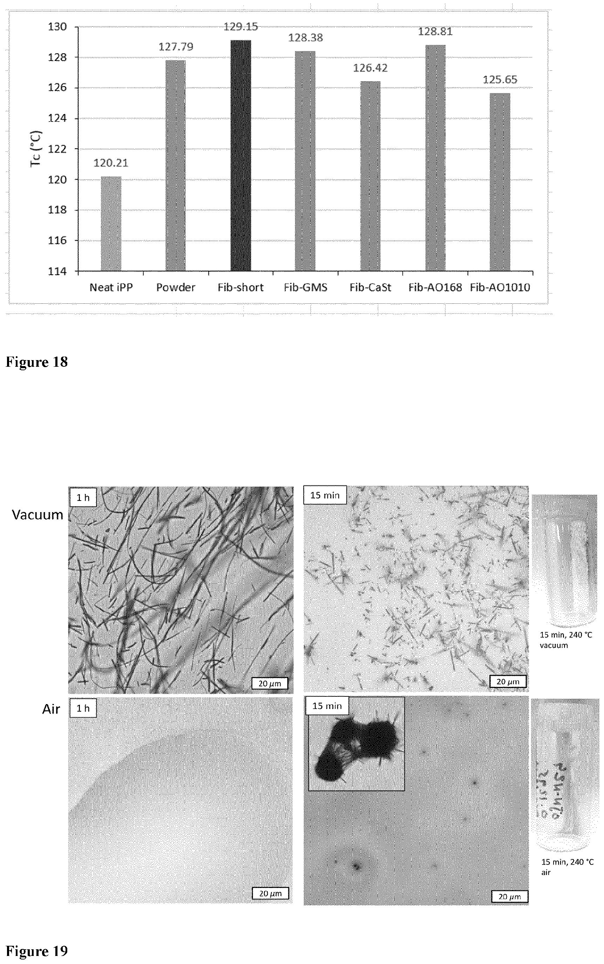

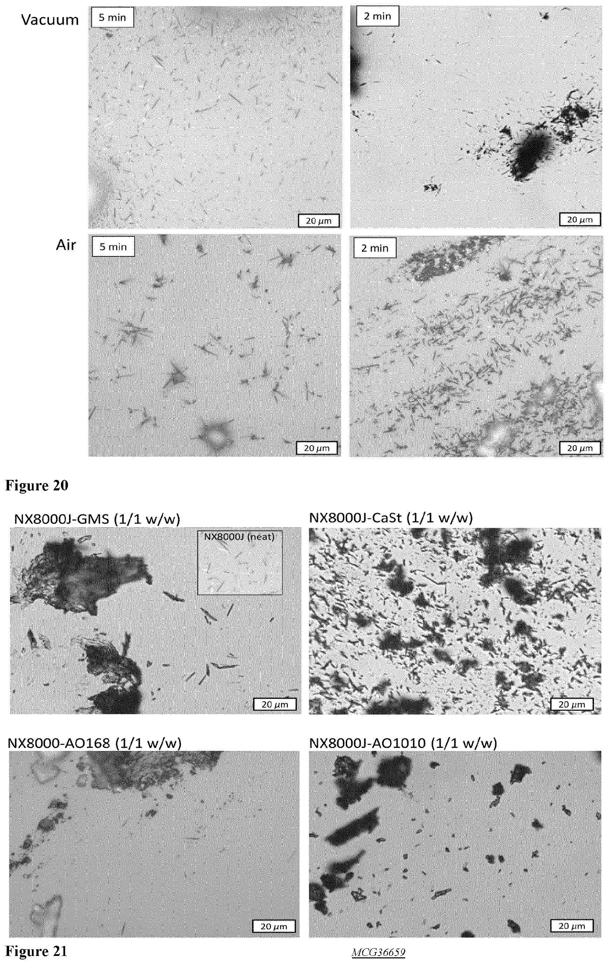

Figure 19 is an optical micrograph of fibrils produced under vacuum and under air. It can clearly be seen that fibril production was insignificant under air, and significantly improved under vacuum. In addition the longer thermal treatment step resulted in longer fibrils. Figure 20 shows fibril growth after 2 or 5 minute thermal treatment under both vacuum and air. It can clearly be seen that under vacuum fibril growth was controlled and that long fibrils could form. Under air fibrils grew but degraded faster so that long fibrils could not form.

### Example 5

**Materials:** 1,2,3-trideoxy-4,6:5,7-bis-O-[(4-propylphenyl)methylene]nonitol (TBPMN) (Millad® NX8000), was obtained from Milliken (USA), and dried in a vacuum oven at 60 °C for 12 h prior to use. Calcium distearate (CaSt) was obtained from Baerlocher (Ceasit® FI Veg), and Mg-Al hydrotalcite (DHT) was provided by Kyowa Chemical Industry. Glycerol monostearate (GMS) was purchased from Riken (Rikemal® AS-005). Pentaerythritol tetrakis(3-(3,5-di-tert-butyl-4-hydroxyphenyl)propionate) (AO1010, Evernox®-10) and tris(2,4-di-tert-butylphenyl) phosphite (AO168, Everfos®-168) were purchased from Everspring Chemical. Isotactic polypropylene (melt flow rate, at 230 °C and 2.16 kg: 8 g/10 min, density: 905 kg/m³) was provided by Sabic®.

For the preparation of mixtures, TBPMN powder (0.2 g) was mixed with the chosen additive powder (0.2 g of GMS, CaSt, AO168 or AO1010) in a vial, and thoroughly mixed by rotating the vial for 5 min at about 60 rpm.

Thermal treatment of the powder mixtures was carried out as follows: The powder mixture (0.4 g) was placed in a glass vial and capped with an Al foil perforated with small holes. The vial was placed on its side in a vacuum oven, pre-heated to 240 °C. The oven was immediately evacuated to about -0.09 MPa (25 Torr). The sample was then maintained at 240 °C for 5 min. The pressure was then returned to atmospheric pressure, and the vial cool down to room temperature under air. No stirring was applied during the thermal treatment. The sample was recovered carefully with a spatula.

Formulated polypropylene was prepared by first adding the polymer pellets (43.7 g) to a Haake PolyLab QC pre-heated to 220 °C under air, and closing the pneumatic ram. The polymer was melted for 1 min at 35 rpm and 220 °C. The ram was raised, and the additive mixture (0.0878 g, 0.2 wt% TBPMN + 0.0878 g, 0.2 wt% additive) was added to the mixer rotating at 35 rpm. The pneumatic ram was lowered, and mixing was continued for 5 min at 35 rpm and 220 °C. The mixing was stopped, and the temperature lowered to room temperature, before recovery of the polymer mixture.

The polymer mixture were pressed using a Fontijne Holland hydraulic hot press..The sample was first cut into small pieces about 0.5 cm x 0.5 cm, and placed on a mold (10 cm x 3 cm, thickness 500 µm). The mold was covered with Teflon sheets and placed between two metal plates. The plates were then introduced in the press, which was pre-heated to 190 °C. The sample was kept at 190 °C for 5 min with no applied pressure, then pressed at 150 kN for 5 min at 190 °C. The pressure was released (0 kN) and the temperature lowered to room temperature. A section of the film was cut for DSC analysis.

Differential scanning calorimetry (DSC) was performed with a Perkin Elmer Pyris 1 equipped with liquid nitrogen cooling. Aluminum pans were sealed under air with 5-10 mg of sample. The temperature of the melting peak maximum (*T*ₚ) was obtained by performing thermal scans by heating from 30 °C to 200 °C at 10 °C/min, maintaining at 200 °C for 1 minute, and cooling from 200 °C to 30 °C at 10 °C/min, and maintaining at 30 °C for 1 min (2 cycles).

### Results

The effect of thermally treated TBPMN together with the use of other additives was then studied. As in example 5, the TBPMN was subjected (alone or in presence of one of the additives GMS, AO168, AO1010 or CaSt) to thermal treatment at 240 °C for 5 minutes under vacuum to form fibrils. The fibrils or mixtures were then used as additives to iPP. The iPP was melted and the powder mixture was added at a rate of 2000 ppm TBPMN

Figure 18 shows the temperature of crystallisation for each of the treatments. When the TBPMN fibrils were used in conjunction with GMS or AO168 good performance was observed. However with the additive CaSt and AO1010 it was apparent that there was degradation during thermal treatment which resulted in a lower performance.

Figure 21 is an optical micrographs showing fibroid growth in the presence of the various additives. With GMS larger fibrils were formed than when TBPMN was used alone. With CaSt thicker fibrils were formed than with TBPMN alone but they were of comparable length. With AO168 very thin fibrils were formed and with AO1010 few visible fibrils formed.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

## Claims

1. A method for manufacturing a clarifying agent comprising the following steps:
(i) providing a composition comprising a sorbitol derivative having the formula (1): 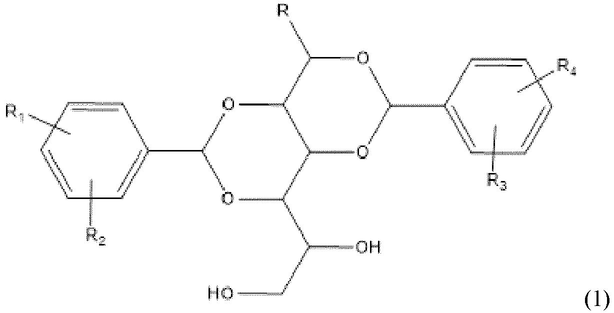
where R is H or C₁-C₄ alkyl; and
R₁, R₂, R₃, and R₄ are each independently H, halo, -CN or C₁-C₄ alkyl,
(ii) maintaining the composition under an inert atmosphere at a temperature at or above the transformation temperature of the sorbitol derivative and below the peak melting temperature of said sorbitol derivative for a period of at least 10 seconds, to provide fibrils of said sorbitol derivative, and
(iii) cooling said composition to below said transformation temperature.

2. A method as claimed in claim 1 wherein the starting materials are heated above the transition temperature, but below the melting point to allow formation of the fibrils.

3. A method as claimed in claim 1 claim 2 wherein the sorbitol derivative is present in an amount of at least 5% by mass based on the total mass of the composition.

4. A method as claimed any preceeding claim wherein the fibrils have an average length of 1000 µm or less, as determined in accordance with ASTM F1877 - 16.

5. A method as claimed any preceeding claim wherein the fibrils have an average diameter in the range of from about 0.01 µm to about 10 µm as determined in accordance with ASTM F1877 - 16.

6. A method as claimed any preceeding claim wherein during the method the temperature is be maintained at or above the transformation temperature for a period of from about 10 seconds to about 240 minutes.

7. A method as claimed any prceeding claim wherein the sorbitol derivative is selected from the group consisting of:
1,3:2,4-dibenzylidenesorbitol (DBS),
1,3:2,4-bis(p-ethylbenzylidene)sorbitol (EDBS),
1,3:2,4-bis(*p*-methylbenzylidene) sorbitol (MDBS),
1,3:2,4-bis(3,4-dimethyldibenzylidene)-sorbitol (DMDBS),
1,2,3-tridesoxy-4,6:5,7-bis-O-[(4-propylphenyl)methylene]nonitol (TBPMN).

8. A method as claimed any preceeding claim wherein the inert atmosphere is an inert gas, such as nitrogen, argon, carbon dioxide, helium, neon, krypton, xenon and radon, or the inert atmosphere is achieved by maintaining the composition under reduced pressure.

9. A method as claimed any of claims 1 to 7 wherein the clarifying agent is prepared in a polymer additive prebend provided oxygen is excluded or reduced compared to the atmosphere.

10. A method as claimed any preceeding claim wherein the composition comprises one or more additives.

11. A method as claimed in claim 10 wherein the additive is selected from the group consisting ofphosphite antioxidants including tris(2,4-di-tert-butylphenyl) phosphite, hindered phenol antioxidants including pentaerythritol tetrakis (3-(3,5-di-tert-butyl 4-hydroxyphenyl) propionate), metal stearates, hydrotalcites, hydroxylamines, hindered amine light stabilizers, ultraviolet light absorbers, amides including glycerol monostearate, slip additives including erucamide and oleamide, optical brightener and pigment.

12. A method as claimed any preceeding claim wherein the composition comprises one or more additives in an amount of from about 0.1% by mass to about 95% by mass based on the total mass of the composition.

13. A method for manufacturing a clarifying agent comprising the following steps:
(i) providing a composition comprising a sorbitol derivative having the formula (1): 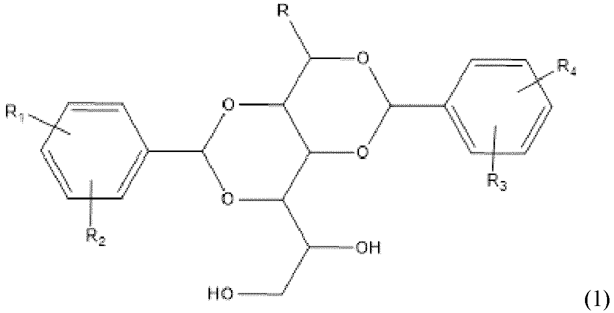
where R is H or C₁-C₄ alkyl; and
R₁, R₂, R₃, and R₄ are each independently H, halo, -CN or C₁-C₄ alkyl,
(ii) mixing the sorbitol derivative with one or more polymer additives:
(iii) maintaining the mixture at a temperature at or above the transformation temperature but below the peak melting temperature of said sorbitol derivative for a period of at least 60 seconds, to provide fibrils of said sorbitol derivative, and below the decomposition temperature of the polymer additive of step (ii):
(iv) cooling said composition to below said transformation temperature.

14. The process of claim 13 which is carried out in an inert atmosphere.

15. A method as claimed in claim 13 or 14 wherein the additive is selected from the group consisting of group consisting ofphosphite antioxidants including tris(2,4-di-tert-butylphenyl) phosphite, hindered phenol antioxidants including pentaerythritol tetrakis (3-(3,5-di-tert-butyl 4- hydroxyphenyl) propionate), metal stearates, hydrotalcites, hydroxylamines, hindered amine light stabilizers, ultraviolet light absorbers, amides including glycerol monostearate, slip additives including erucamide and oleamide, optical brightener and pigment.

16. Also provided is a method for manufacturing a clarifying agent comprising the following steps:
(i) providing a composition comprising a sorbitol derivative having the formula (1): 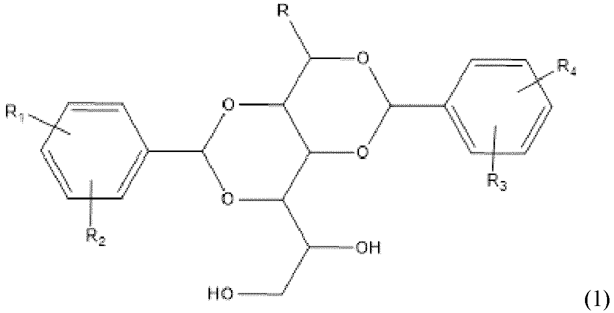
where R is H or C₁-C₄ alkyl; and
R₁, R₂, R₃, and R₄ are each independently H, halo, -CN or C₁-C₄ alkyl,
(ii) maintaining the mixture at a temperature at or above the transformation temperature of the sorbitol derivative and below the peak melting temperature of said sorbitol derivative for a period of at least 60 seconds, to provide fibrils of said sorbitol derivative having an average length of 1000 mm or less, as determined in accordance with ASTM F1877 - 16: (iv) cooling said composition to below said transformation temperature.

17. A method as claimed in 16 wherein the fibrils have an average diameter of from about 0.01 µm to about 10 µm as determined in accordance with ASTM F1877 - 16.

18. A method for clarifying polymer comprising the following steps:
(i) providing sorbitol derivative fibrils manufactured by the methods described above,
(ii) providing a polyolefin polymer,
(iii) heating said sorbitol derivative and said polymer, to melt the polymer, wherein said sorbitol derivative and said polymer are heated to a temperature which exceeds the peak melting temperature of polymer,
(iv) cooling the heated mixture of step (iii) to provide solidified polymer.

19. An article of manufacture comprising solidified polymer formed by the method of any preceding claim.
